# EUROPÄISCHE PATENTSCHRIFT

(11) **EP 4 314 103 B1**
(45) Veröffentlichungstag und Bekanntmachung des Hinweises auf die Patenterteilung: **15.10.2025**
(21) Anmeldenummer: 22717833.2
(22) Anmeldetag: 31.03.2022
(51) Int. Cl.: C08G 18/24, B65D 83/68, C08G 18/32, C08G 18/76, C08G 18/80

(54) **2-KOMPONENTIGES LACKSYSTEM**
TWO-COMPONENT PAINT SYSTEM
SYSTÈME DE PEINTURE À DEUX COMPOSANTS

(30) Priorität: 31.03.2021 DE 102021108237
(43) Veröffentlichungstag der Anmeldung: 07.02.2024
(73) Patentinhaber: Peter Kwasny GmbH, 74831 Gundelsheim (DE)
(72) Erfinder: KWASNY, Hans-Peter, 74074 Heilbronn (DE); KRANIG, Wolfgang Lothar, 74177 Bad Friedrichshall (DE)
(74) Vertreter: Schneiders & Behrendt Bochum
(86) Internationale Anmeldenummer: PCT/EP2022/058539
(87) Internationale Veröffentlichungsnummer: WO 2022/207778

(56) Entgegenhaltungen:
- EP-B1- 2 114 795
- US-A1- 2004 259 968

## Beschreibung

Die Erfindung betrifft ein 2-komponentiges Lacksystem mit einer Bindemittelkomponente und einer Härterkomponente, die vor der Applikation des Lacksystems voneinander getrennt sind zur Applikation miteinander in Kontakt gebracht werden, so dass das Bindemittel in der Bindemittelkomponente durch Kontakt mit der Härterkomponente vernetzt, wobei die Bindemittelkomponente neben dem Bindemittel wenigstens ein mit der Härterkomponente unreaktives Lösungsmittel, einen Vernetzungskatalysator sowie ein Treibmittel enthält. Das 2-komponentige Lacksystem ist in einer herkömmlichen 2K-Aerosoldosen mit einer Innenhülse enthalten.

2-Komponentige Lacksysteme sind bekannt und werden vielfach zum Beschichten von Oberflächen eingesetzt. Ein bevorzugtes Einsatzgebiet ist der Autoreparatursektor. Solche Lacksysteme werden in der Regel als Aerosole ausgebracht. Zur Anwendung kommen dabei auch Aerosoldosen, die eine Innenhülse aufweisen, die von außen betätigt werden kann. Die Bindemittelkomponente befindet sich in der Aerosoldose, die Härterkomponente in der Innenhülse. Bei Auslösung der Innenhülse tritt die Härterkomponente in die Bindemittelkomponente aus und führt zu deren Vernetzung.

In der Lackindustrie übliche Härterkomponenten sind solche auf Basis von polyfunktionellen Isocyanaten. Solche polyfunktionellen Isocyanate sind zumeist Gemische und enthalten in der Regel leicht flüchtige und toxische monomere und dimere Bestandteile, die bei Versprühen aus einer Aerosoldose in Form von feinen Tröpfchen in die Atemwege des Anwenders gelangen können. Der Gehalt solcher lungengängigen Bestandteile in Aerosolformulierung ist deshalb gesetzlich begrenzt. Die Einhaltung der Grenzen erweist sich aber häufig als problematisch.

2K-Druckdosen für die Ausbringung von Lacksystemen und Isolierschäumen sind ebenfalls bekannt. Solche Druckdosen enthalten eine von außen betätigbare Innenhülse für die Härterkomponente, die erst vor Anwendung der Druckdose aktiviert wird. Beispielhaft wird auf die Druckdosen Bezug genommen, die in der WO 85/00 157 A1, WO 2002/076 852 A1, WO2004/056 660, WO 2008/092 670A1, EP2114795A1 oder DE 10 2005 049 400 A1 beschrieben sind. Die US 2004/259968 A1 beschreibt die Herstellung von PU-Systemen mit niedrigem monomeren Diisocyanatgehalt.

Dementsprechend liegt der Erfindung die Aufgabe zugrunde, ein 2-komponentiges Lacksystem bereitzustellen, dessen Gehalt an niedermolekularen Isocyanatgruppen tragenden Farbstoffen begrenzt ist.

Dies wird mit einem 2-komponentigen Lacksystem der eingangs bezeichneten Art erreicht, bei dem die Härterkomponente durch Vorreaktion aus einem Unterschuss einer bi-oder trifunktionellen niedermolekularen aktiven Wasserstoff tragenden Verbindung mit einem Vernetzer auf Isocyanatbasis mit einem Restgehalt an monomeren oder dimeren Isocyanaten von ≤ 1 % w/w erhältlich ist.

Zweckmäßigerweise beträgt der Restgehalt an monomeren oder dimeren Isocyanaten höchstens 0,5 % w/w und ist ≤ 0,1 % w/w.

Die zum Einsatz kommenden Isocyanaten sind, um die Vernetzung des Bindemittel der Bindemittelkomponente zu bewirken, polyfunktionell, d. h. sie enthalten wenigstens zwei Isocyanatgruppen. Herstellungsbedingt sind diese Isocyanate Gemische von Monomeren, Dimeren und höher kondensierten Isocyanaten. Beispielhaft wird auf das häufig verwandte Roh-MDI hingewiesen. Entsprechendes gilt für andere aromatische und aliphatisch polyfunktionelle Isocyanate. Problematisch sind die niedermolekularen Bestandteile, insbesondere die Monomeren.

Es hat sich als sehr praktikabel erwiesen, den Monomergehalt solcher polyfunktioneller Isocyanate durch Reaktion mit nanofunktionellen Alkoholen abzusenken. Alkohole reagieren bevorzugt mit den niedermolekularen Bestandteilen solcher Gemische, d. h. den Monomeren. Bei Einsatz von Alkoholen im Unterschuss verbleibt im Gemisch eine hinreichende Zahl von Isocyanatgruppen für eine nachfolgende Reaktion, etwa eine Vernetzung.

Erreicht wird dieser geringe Gehalt an toxischen Isocyanaten durch die Vorreaktion mit einer bi-oder trifunktionellen niedermolekularen aktiven Wasserstoff tragenden Verbindung. Bevorzugt sind niedermolekulare Alkohole oder Amine, etwa Diole, Triole, Diamine oder Triamine. Besonders bevorzugt sind Ethylenglykol und Ethylendiamin.

Die Verbindungen sollten nicht mehr als sechs Kohlenstoffatome aufweisen.

Die Vorreaktion hat damit die Aufgabe, die gesundheitlich besonders kritischen Härterbestandteile chemisch zu binden und sie in oligomere oder polymere chemische Produkte zu überführen und damit weniger kritisch werden zu lassen.

Mit der Bindemittelkomponente in der 2K-Aerosoldosen geht die Härterkomponente nach der Vorreaktion eine Vernetzungsreaktion ein und wird damit an die Bindemittelkomponente gebunden und zu polymeren Strukturen abreagiert. Damit ist sichergestellt, dass bei der Auslösung der 2K-Aerosoldosen keine lungengängigen toxischen Partikeln mehr ausgetragen werden.

Als Vernetzer können insbesondere aromatische und aliphatische Polyisocyanate zum Einsatz kommen, beispielsweise solche, die von der BASF unter der Bezeichnung Basonat vertrieben werden.

Besonders bevorzugt ist es, die Vorreaktion zur Herstellung der Härterkomponente in der Innenhülse der 2K-Aerosoldosen durchzuführen. Dazu werden die Bestandteile, die Isocyanatkomponente und die aktiven Wasserstoff enthaltende Verbindung, in der Regel zusammen mit einem inerten Lösungsmittel in die Innenhülse eingefüllt und dort reagieren gelassen. Die Reaktion läuft in der Regel in einem Zeitraum von 5 Minuten bis 8 Stunden, insbesondere 15 Minuten bis 2 Stunden ab. In der Regel wird ein inertes Lösungsmittel zugegeben, beispielsweise Aceton oder Butylacetat. Die Innenhülse kann unmittelbar nach Einfüllen der Komponenten verschlossen werden. Diese Vorgehensweise erspart es, die Vorreaktion in einem separaten Reaktor durchzuführen. Selbstverständlich ist auch diese Arbeitsweise möglich, sodass die vorreagierte Härterkomponente in die Innenhülse eingeführt wird.

Die Bindemittelkomponente enthält neben dem eigentlichen Bindemittel einen Katalysator, der die Vernetzung fördert, ein unreaktives Lösungsmittel und ein Treibgas. Katalysatoren für die Vernetzung von Isocyanaten sind bekannt. Beispielhaft sei Dibutylzinndilaurat genannt, ein Trimerisierungskatalysator. Andere übliche Katalysatoren können ebenfalls eingesetzt werden, wobei die Art des Katalysators Einfluss auf die Wartezeit hat, die vergehen muss, bis das Lacksystem versprüht werden kann. Als unreaktives oder inertes Lösungsmittel können Ketone, insbesondere Aceton und Butylacetat genannt werden. Geeignete Treibmittel sind beispielsweise unter Druck verflüssigt bare Kohlenwasserstoffe, wie Propan oder Butan, Dimethylether oder auch Mischungen daraus. Insbesondere geeignet ist Dimethylether, der gleichzeitig als Lösungsmittel für die Bindemittelkomponente dient.

Das Bindemittel der Bindemittelkomponente enthält übliche Lackhilfsmittel sowie gegebenenfalls Pigmente. Genannt werden können Entschäumer, Füllstoffe, Benetzungshilfsmittel, Stabilisatoren, Korrosionsinhibitoren, Hilfsmittel für die Filmbildung und Mattierungsmittel. Damit sind sowohl Klarlacke als auch pigmentierte Lacke möglich.

Als Richtwert können für die Gewichtsverhältnisse genannt werden, dass Bindemittelkomponente und Härterkomponente in einem Gewichtsverhältnis von 5:1 bis 15:1, insbesondere etwa 10:1 vorliegen. In der Härterkomponente liegen die aktiven Wasserstoff tragende Verbindung und der Vernetzer auf Isocyanatbasis insbesondere in einem Gewichtsverhältnis von 1:20 bis 1:100 vor, je nach Anteil toxischer Bestandteil im Vernetzer.

Um nach Auslösen der Innenhülse die Vermischung der Bindemittelkomponente mit der Härtekomponente zu verbessern, kann die Aerosoldose eine Mischhilfe in Form einer Kugel oder eines kleinen Stabes aus Metall enthalten.

Die Erfindung wird durch nachstehendes Beispiel näher erläutert.

Ein bevorzugtes Lacksystem hat die folgende Zusammensetzung:
Die Bindemittelkomponente setzt sich wie folgt zusammen:
103 g Bindemittel MIPA PU 240-90 2K-PU Lack glänzend RAL 3000
66,14 g Aceton
11,7 g Butylacetat
0,3 g Dibutylzinndilaurat
121 g Dimethylether

Die Bindemittelkomponente wird in den eine 2K-Aerosoldosen eingefüllt.

Für die Härterkomponente werden die folgenden Bestandteile in der angegebenen Reihenfolge in die Innenhülse der Aerosoldosen gegeben:
0,3 g Ethylenglykol
6,0 g Butylacetat
23,7 g Basonat HI 190 B/S NG

Anschließend wird die Innenhülse in die 2K-Aerosoldosen eingesetzt und die Dose verschlossen.

Zur Ausbringung des Inhalts (Lackierung) wird die Dose durch die Zerstörung der innen befindlichen Hülse ausgelöst, 2 Minuten geschüttelt, um eine homogene Verteilung der Komponenten zu gewährleisten und danach 30 Minuten ruhen gelassen. Nach erneutem Schütteln für 15 Sekunden kann der Lack versprüht werden. Das Lackspray enthält weniger als 0,1 Gewichtsprozent monomere oder dimere Isocyanate. Eine Mischhilfe fördert den Mischvorgang.

Durch die Kapselung des Systems in der 2K-Aerosoldosen hat der Anwender keinen direkten Kontakt mit den toxischen Bestandteilen der Härterkomponente, die bereits durch das Mischen der Komponenten in der in Hülse weitgehend eliminiert wurden und durch die Reaktion mit der Bindemittelkomponente weiter reduziert wurden. Im fertigen Lack ist die Härterkomponente an das polymere Bindemittel gebunden und trägt damit selbst polymeren Charakter.

Die Applikation aus der Aerosoldosen basiert auf dem Austreiben und der Zerstäubung des Lacksystems mittels Treibgas. Der Zerstäubungsprozess tritt unmittelbar nach Austritt aus der Düse der Aerosoldosen auf, wobei der Lack zielgerichtet auf das zu lackierende Objekt gerichtet ist. Die Verwendung von Dimethylether als Treibmittel reduziert dabei den Rückstoß von Spraymaterial zurück in Richtung auf den Anwender. Damit wird der Anwender mit einer deutlich geringeren Dosisantragbestandteilen und potentiell gesundheitsschädlichen niedermolekularen Härterbestandteilen konfrontiert.

Die Erfindung betrifft auch das Verfahren zur Befüllung solcher 2K-Aerosoldosen, wie im Beispiel beschrieben.

## Patentansprüche

1. 2-Komponentiges Lacksystem mit einer Bindemittelkomponente und einer Härterkomponente, die vor der Applikation des Lacksystems voneinander getrennt sind und zur Applikation miteinander in Kontakt gebracht werden, so dass das Bindemittel in der Bindemittelkomponente durch Kontakt mit der Härterkomponente vernetzt, wobei die Bindemittelkomponente neben dem Bindemittel wenigstens ein mit der Härterkomponente unreaktives Lösungsmittel, einen Vernetzungskatalysator sowie ein Treibmittel enthält, **dadurch gekennzeichnet, dass** die Härterkomponente durch Vorreaktion aus einem Unterschuss einer bi-oder trifunktionellen niedermolekularen aktiven Wasserstoff tragenden Verbindung mit einem Vernetzer auf Isocyanatbasis mit einem Restgehalt an monomeren oder dimeren Isocyanaten von ≤ 1 % w/w erhältlich ist, enthalten in einer 2K-Aerosoldose mit einer Innenhülse.

2. 2-Komponentiges Lacksystem nach Anspruch 1, **dadurch gekennzeichnet, dass** der Restgehalt an monomeren oder dimeren Isocyanaten ≤ 0,1 % w/w beträgt.

3. 2-Komponentiges Lacksystem nach Anspruch 1 oder 2, **dadurch gekennzeichnet, dass** das Bindemittel übliche Zusatzstoffe und Pigmente enthält.

4. 2-Komponentiges Lacksystem nach einem der vorstehenden Ansprüche, **dadurch gekennzeichnet, dass** die Bindemittelkomponente Aceton und/oder Butylacetat als Lösungsmittel enthält.

5. 2-Komponentiges Lacksystem nach einem der vorstehenden Ansprüche, **dadurch gekennzeichnet, dass** das Bindemittel Dibutylzinndilaurat als Katalysator enthält.

6. 2-Komponentiges Lacksystem nach einem der vorstehenden Ansprüche, **dadurch gekennzeichnet, dass** die Bindemittelkomponente Dimethylether als Treibmittel enthält.

7. 2-Komponentiges Lacksystem nach einem der vorstehenden Ansprüche, **dadurch gekennzeichnet, dass** die Härterkomponente einen niedermolekularen Alkohol oder ein niedermolekulares Amin als aktiven Wasserstoff tragende Verbindung enthält.

8. 2-Komponentiges Lacksystem nach Anspruch 7, **dadurch gekennzeichnet, dass** die aktiven Wasserstoff tragende Verbindung ein Diol, Triol, Diamin oder Triamin ist.

9. 2-Komponentiges Lacksystem nach Anspruch 7 oder 8, **dadurch gekennzeichnet, dass** die aktiven Wasserstoff tragende Verbindung Ethylenglykol ist.

10. 2-Komponentiges Lacksystem nach einem der vorstehenden Ansprüche, **dadurch gekennzeichnet, dass** der Vernetzer auf Isocyanatbasis ein aliphatisches Polyisocyanat ist.

11. 2-Komponentiges Lacksystem nach einem der vorstehenden Ansprüche, **dadurch gekennzeichnet, dass** die Härterkomponente durch Vorreaktion in der Innenhülse der 2K-Aerosoldosen erhältlich ist.

12. 2-Komponentiges Lacksystem nach Anspruch 11, **dadurch gekennzeichnet, dass** die Härterkomponente ein inertes Lösungsmittel, insbesondere Aceton oder Butylacetat, enthält.

## Claims

1. Two-component paint system comprising a binding agent component and a curing agent component which are separated from one another prior to application of the paint system and are brought into contact with one another for application, so that the binding agent in the binding agent component crosslinks by contact with the curing agent component, with the binding agent component containing, in addition to the binding agent, at least one solvent which is unreactive with the curing agent component, a crosslinking catalyst and a propellant agent, **characterized in that** the curing agent component is obtainable by pre-reaction of a deficient amount of a bi- or trifunctional low-molecular active hydrogen-carrying compound with an isocyanate-based crosslinker having a residual content of monomeric or dimeric isocyanates of ≤ 1% per weight, said paint system being contained in a 2K aerosol spray can provided with an inner sleeve.

2. Two-component coating system according to claim 1, **characterized in that** the residual content of monomeric or dimeric isocyanates amounts to ≤ 0.1% per weight.

3. Two-component paint system according to claim 1 or 2, **characterized in that** the binding agent contains conventional additives and pigments.

4. Two-component paint system according to any one of the preceding claims, **characterized in that** the binding agent component contains acetone and/or butyl acetate as solvent.

5. Two-component paint system according to any one of the preceding claims, **characterized in that** the binding agent contains dibutyltin dilaurate as catalyst.

6. Two-component paint system according to any one of the preceding claims, **characterized in that** the binding agent component contains dimethyl ether as propellant.

7. Two-component paint system according to any one of the preceding claims, **characterized in that** the curing agent component contains a low-molecular alcohol or a low-molecular amine as active hydrogen-carrying compound.

8. Two-component paint system according to claim 7, **characterized in that** the active hydrogen-carrying compound is a diol, triol, diamine or triamine.

9. Two-component paint system according to claim 7 or 8, **characterized in that** the active hydrogen-carrying compound is ethylene glycol.

10. Two-component paint system according to any one of the preceding claims, **characterized in that** the isocyanate-based crosslinker is an aliphatic polyisocyanate.

11. Two-component paint system according to any one of the preceding claims, **characterized in that** the curing agent component is obtainable by pre-reaction in the inner casing of 2K aerosol cans.

12. Two-component paint system according to claim 11, **characterized in that** the curing agent component contains an inert solvent, in particular acetone or butyl acetate.

## Revendications

1. Système de peinture à deux composants comprenant un composant liant et un composant durcisseur qui sont séparés l'un de l'autre avant l'application du système de peinture et qui sont mis en contact l'un avec l'autre pour l'application, de sorte que le liant contenu dans le composant liant se réticule au contact du composant durcisseur, le composant liant contenant, outre le liant, au moins un solvant non réactif avec le composant durcisseur, un catalyseur de réticulation et un agent propulseur, **caractérisé en ce que** le composant durcisseur est obtenu par une réaction préalable d'un déficit d'un composé bi- ou trifonctionnel à faible poids moléculaire portant d'hydrogène actif avec un agent de réticulation à base d'isocyanate avec une teneur résiduelle en isocyanates monomères ou dimères de ≤ 1 % en poids, contenu dans une bombe aérosol 2K avec un manchon intérieure.

2. Système de peinture à deux composants selon la revendication 1, **caractérisé en ce que** la teneur résiduelle en isocyanates monomères ou dimères est de ≤ 0,1 % en poids.

3. Système de peinture à deux composants selon la revendication 1 ou 2, **caractérisé en ce que** le liant contient des additifs et des pigments usuels.

4. Système de peinture à deux composants selon l'une des revendications précédentes, **caractérisé en ce que** le composant liant contient de l'acétone et/ou de l'acétate de butyle comme solvant.

5. Système de peinture à deux composants selon l'une des revendications précédentes, **caractérisé en ce que** le liant contient du dibutylétain dilaurate comme catalyseur.

6. Système de peinture à deux composants selon l'une des rev endications précédentes, **caractérisé en ce que** le composant liant contient du diméthyléther comme propulseur.

7. Système de peinture à deux composants selon l'une des revendications précédentes, **caractérisé en ce que** le composant durcisseur contient un alcool à faible poids moléculaire ou une amine à faible poids moléculaire comme composé porteur d'hydrogène actif.

8. Système de peinture à deux composants selon la revendication 7, **caractérisé en ce que** le composé contenant de l'hydrogène actif est un diol, un triol, une diamine ou une triamine.

9. Système de peinture à deux composants selon la revendication 7 ou 8, **caractérisé en ce que** le composé actif contenant de l'hydrogène est l'éthylène glycol.

10. Système de peinture à deux composants selon l'une des revendications précédentes, **caractérisé en ce que** l'agent de réticulation à base d'isocyanate est un polyisocyanate aliphatique.

11. Système de peinture à deux composants selon l'une des revendications précédentes, **caractérisé en ce que** le composant durcisseur est obtenu par une réaction préalable dans le manchon intérieur des bombes aérosols 2K.

12. Système de peinture à deux composants selon la revendication 11, **caractérisé en ce que** le composant durcisseur contient un solvant inerte, en particulier de l'acétone ou de l'acétate de butyle.
